Europäisches Patentamt

European Patent Office

Office européen des brevets

(19)

(11) Publication number : **0 488 765 B1**

## EUROPEAN PATENT SPECIFICATION

(12)

(45) Date of publication of patent specification :
20.07.94 Bulletin 94/29

(51) Int. Cl.[5] : **C01B 33/107**

(21) Application number : **91311079.7**

(22) Date of filing : **29.11.91**

(54) Purification of silicon tetrachloride.

(30) Priority : **29.11.90 JP 333185/90**

(43) Date of publication of application :
**03.06.92 Bulletin 92/23**

(45) Publication of the grant of the patent :
**20.07.94 Bulletin 94/29**

(84) Designated Contracting States :
**DE FR GB**

(56) References cited :
**DE-A- 1 948 911**
**DE-A- 2 805 824**
**US-A- 4 372 834**
**CHEMICAL ABSTRACTS, vol. 112, no. 14, 2nd
April 1990, page 162, abstract no. 121596p,
Columbus, Ohio, US; D.A. MIXON et al.:
"Ultrapurification of tetrachlorosilane by
photochlorination in a bubble column reac-
tor", & AIChE J. 1990, 36(2), 216-26**

(73) Proprietor : **SHIN-ETSU CHEMICAL CO., LTD.
6-1, Ohtemachi 2-chome
Chiyoda-ku Tokyo (JP)**

(72) Inventor : **Ogihara, Tsutomu
No.C-11,Sanai-cho 7-chome
Jouetsu-shi, Niigata-ken (JP)**
Inventor : **Shimizu, Takaaki
No.3-19, Minamihon-cho 3-chome
Jouetsu-shi, Niigata-ken (JP)**
Inventor : **Naruse, Masahiko
No.1-3-19, Minato-cho 2-chome
Jouetsu-shi, Niigata-ken (JP)**

(74) Representative : **Stoner, Gerard Patrick et al
MEWBURN ELLIS
York House
23 Kingsway
London WC2B 6HP (GB)**

EP 0 488 765 B1

Jouve, 18, rue Saint-Denis, 75001 PARIS

## Description

This invention relates to a method for purifying a silicon tetrachloride product contaminated with methylchlorosilanes by removing the methylchlorosilanes therefrom.

Silicon tetrachloride has been widely used in the art as raw material for the preparation of wet or dry silica powder, semiconductor related special reactant gas, synthetic quartz, optical fibers and the like. Recently, it is of great interest in the fiber optic field.

Silicon tetrachloride is generally synthesized by reacting metallic silicon with chlorine or hydrogen chloride. In reacting metallic silicon with hydrogen chloride to produce silicon tetrachloride, an incidental amount of carbon contained in the metallic silicon offers a methyl source to the reaction so that minor amounts of methylchlorosilanes such as monomethyltrichlorosilane and dimethyldichlorosilane are concurrently formed as by-products. More particularly, the metallic silicon which is a raw material used in the commercial synthesis of silicon tetrachloride contains several hundreds of ppm of carbon. When such metallic silicon is reacted with hydrogen chloride, it is inevitable that several tens to several hundreds of ppm of methylchlorosilanes are formed as by-products. It is difficult to completely remove the methylchlorosilanes by conventional techniques such as distillation since the methylchlorosilanes have a boiling point approximate to the boiling point of silicon tetrachloride.

Advanced optical fibers require the use of raw materials which are sufficiently pure to exert no detrimental effect on transmission characteristics. If a silicon tetrachloride product containing some methylchlorosilanes is used as a raw material, there are prepared optical fibers in which structure a minor amount of carbon is derived from the methylchlorosilanes, causing some transmission losses. Therefore, the impurities or methylchlorosilanes must be removed to 5 ppm or less before the silicon tetrachloride product prepared by the above-mentioned method can be used as a raw material in the manufacture of optical fibers.

The present invention deals with a silicon tetrachloride product which is synthesized e.g. by reaction of metallic silicon with hydrogen chloride and contains methylchlorosilanes as impurities and its object is to provide a method for purifying the silicon tetrachloride product by removing the methylchlorosilanes, preferably to 1ppm or less. The purified Si tetrachloride is also provided.

Investigating how to purify a silicon tetrachloride product which is synthesized through reaction of metallic silicon with hydrogen chloride and contains a minor amount of methylchlorosilanes as impurities, the inventors have found that by exposing the silicon tetrachloride product to light in the presence of chlorine, thereby chlorinating methyl groups of the methylchlorosilanes, that is, converting the methylchlorosilanes into compounds having a higher boiling point, and distilling off the methylchlorosilanes having a chlorinated methyl group from the product, there is obtained silicon tetrachloride containing 1 ppm or less of methylchlorosilanes, that is, substantially free of methylchlorosilanes.

As previously mentioned, it is impossible in practice to completely remove methylchlorosilanes from a silicon tetrachloride product by distillation in a conventional manner since the methylchlorosilanes have a boiling point close to the boiling point of silicon tetrachloride as shown in Table 1.

## Table 1

|  | Boiling point (°C) |
|---|---|
| $SiCl_4$ | 57 |
| $(CH_3)_3SiCl$ | 57 |
| $(CH_3)_2SiCl_2$ | 70 |
| $CH_3SiCl_3$ | 66 |

Exposure to light in the presence of chlorine causes methylchlorosilanes to be chlorinated at their methyl groups and thus converted into compounds having a higher boiling point. For example, monomethyltrichlorosilane is converted into chloromethyltrichlorosilane having a boiling point of 117°C, with the difference in boiling point from silicon tetrachloride being increased from 9°C to 60°C. Such a difference in boiling point allows for easy isolation and purification by distillation.

Therefore, the present invention provides a method for purifying silicon tetrachloride containing a minor amount of methylchlorosilanes, comprising the steps of: exposing the silicon tetrachloride to light in the presence of chlorine, thereby chlorinating methyl groups of the methylchlorosilanes, and distilling off the chlorin-

2

ated methylchlorosilanes from the silicon tetrachloride.

Japanese Patent Publication No. 45855/1981 discloses a technique of purifying silicon tetrachloride contaminated with a silane having a ≡Si-H bond by exposing the silicon tetrachloride to light in the presence of halogen. This technique utilizes the following set of reactions.

$$X_2 + light \rightarrow 2X\cdot$$
$$X\cdot + HSiX_3 \rightarrow HX + \cdot SiX_3$$
$$X\cdot + \cdot SiX_3 \rightarrow SiX_4$$

This patent also intends that the impurity, i.e. a silane having a ≡Si-H bond is converted into and recovered as silicon tetrachloride or end product.

The principle of the present invention is completely different from the above-referred patent because the present invention utilizes the reaction between methyl group and chlorine atom, which is illustrated below using monomethyltrichlorosilane as an exemplary impurity.

$$X_2 + light \rightarrow 2X\cdot$$
$$X\cdot + CH_3SiCl_3 \rightarrow HX + \cdot CH_2SiCl_3$$
$$X_2 + \cdot CH_2SiCl_3 \rightarrow XCH_2SiCl_3 + X\cdot$$

The reaction rate is slow as compared with the above-referred patent and therefore, the reaction conditions differ from the above-referred patent. In the present invention, the methylchlorosilane impurities are converted into higher boiling point compounds, which are removed from silicon tetrachloride, rather than being converted into silicon tetrachloride or end product. Distillation step is always necessary to separate the compounds from the silicon tetrachloride. In these respects, the present invention is essentially different from the above-referred patent.

Moreover organic impurities, i.e. hydrocarbons are removed from Silly by photochlorination and subsequent distillation.

DETAILED DESCRIPTION

The silicon tetrachloride to be purified by the method of the invention is generally synthesized by reaction of metallic silicon with hydrogen chloride and contains as impurities methylchlorosilanes such as monomethyltrichlorosilane and dimethyldichlorosilane.

According to the invention, the silicon tetrachloride contaminated with methylchlorosilanes, sometimes referred to as crude silicon tetrachloride, is first exposed to light in the presence of chlorine. Preferred are light sources capable of emitting a large proportion of ultraviolet radiation having a wavelength of 200 to 380 nm, for example, low and high pressure mercury lamps and xenon lamps, with the high pressure mercury lamps being most preferred. Since reaction of methylchlorosilanes with chlorine is relatively slow, the reaction should preferably take place in an area having a light intensity of at least 20 $W/cm^2$, more preferably at least 30 $W/cm^2$, most preferably at least 50 $W/cm^2$.

Theoretically, the amount of chlorine used is equal to the moles of methylchlorosilanes. In practice, chlorine is generally used in an excess amount of several to several tens of moles, for example, 2 to 100 mol, preferably 5 to 80 mol, more preferably 10 to 50 mol.

In the practice of the invention, reaction may be carried out by introducing chlorine into the crude silicon tetrachloride, thereby dissolving chlorine therein, and exposing the crude silicon tetrachloride to light, or alternatively, by introducing chlorine into the crude silicon tetrachloride under exposure to light. The reaction temperature may range from room temperature to the reflux temperature of silicon tetrachloride. The reaction time is relatively long due to slow reaction rate as compared with the above-referred patent. As opposed to the above-referred patent requiring only 30 minutes of exposure to a mercury lamp to convert all ≡Si-H bonds to ≡Si-Cl bonds, the present invention favors a relatively long time of light exposure. For example, at least 45 minutes, especially at least one hour is recommended in order to convert substantially all methyl in the crude product into chloromethyl groups. More particularly, the exposure time varies with the content of methylchlorosilanes or impurities and the intensity of a light source. Especially the light intensity dictates the reaction rate and a light source of lower intensity requires a long time of exposure. For a light intensity of 20 $W/cm^2$ or higher, methylchlorosilanes will complete their reaction within 3 hours of exposure. In this regard, best results are obtained by continuing exposure until methylchlorosilanes are detected no longer.

After photo-reaction takes place to a full extent, there are left little or no methylchlorosilanes having a boiling point difference of about 10°C or so from silicon tetrachloride. What is left as impurities at this point are methylchlorosilanes in which methyl groups have been chlorinated through photo-reaction, that is, chloromethylated chlorosilanes having a higher boiling point. More specifically, among several compounds resulting from photo-reaction, monochloromethyltrichlorosilane has the closest boiling point of 117°C to silicon tetrachloride. This corresponds to a rise of about 50°C due to the newly formed carbon-to-chlorine bond as compared with the boiling point (66°C) of monomethyltrichlorosilane prior to reaction. There is a difference of 60°C from the boiling point (57°C) of silicon tetrachloride. This compound can be readily separated from silicon tetrachloride by distillation. The remaining compounds are accompanied by a larger rise in boiling point. Therefore, separation by simple distillation can yield silicon tetrachloride free of methylchlorosilanes.

The silicon tetrachloride purified through consecutive steps of photo-reaction and distillation is substantially free of impurities including methylchlorosilanes and chlorinated compounds thereof. Often the content of residual methylchlorosilanes can be reduced to 1 ppm or lower.

The silicon tetrachloride purified by the present method is well suited as a raw material for optical fibers because manufacture of carbon-free optical fibers having good transmission characteristics is expectable.

There has been described a simple method for purifying the crude silicon tetrachloride, capable of yielding high purity silicon tetrachloride free of methylchlorosilanes and thus suitable as optical fiber source material.

EXAMPLE

Examples of the present invention are given below by way of illustration and not by way of limitation.

Example

A glass reaction/distillation apparatus having a volume of 500 ml was equipped with a distillation tower (having a diameter of 20 mm and a length of 700 mm and filled with stainless steel packings), gas inlet tube, thermometer, and high pressure mercury lamp (power 500 W). The apparatus was charged with 500 grams of silicon tetrachloride of 99.9% purity containing 63 ppm of monomethyltrichlorosilane and 11 ppm of dichlorodimethylsilane, and purged with dry nitrogen gas. About 1 gram of dry chlorine was added to and dissolved in the silicon tetrachloride.

While the reaction apparatus was externally cooled, the mercury lamp was operated for one hour for photo-reaction to take place until disappearance of the peak representative of impurities was observed by gas chromatography. The reaction product was distilled at a reflux ratio of 2:1.

The distillate was analyzed by gas chromatography, and none of trichloromethylsilane, dichlorodimethylsilane and other methylchlorosilanes were detected at all (detection level 1 ppm).

Comparative Example

The same silicon tetrachloride containing monomethyltrichlorosilane and dichlorodimethylsilane as used in Example was removed of the methylchlorosilanes by using only a rectification tower, but not resorting to photo-reaction with chlorine gas. Namely, the same reactor/distillation flask as used in Example was operated at varying reflux ratios and the distillates were analyzed by gas chromatography.

The results are shown in Table 2.

### Table 2

| | Reflux ratio | $CH_3SiCl_3$ | $(CH_3)_2SiCl_2$ |
|---|---|---|---|
| Starting material | - | 63 ppm | 11 ppm |
| Distillate | 5:1 | 59 ppm | 10 ppm |
| Distillate | 10:1 | 52 ppm | 4 ppm |

As is evident from the data of Table 2, it was impossible to completely remove methylchlorosilanes by mere rectification because their difference in boiling point to silicon tetrachloride was small.

**Claims**

1. A method of purifying silicon tetrachloride containing a minor amount of at least one methylchlorosilane, comprising the steps of:

exposing the silicon tetrachloride to light in the presence of chlorine, thereby chlorinating methylchlorosilane methyl groups, and

separating the chlorinated methylchlorosilane and the silicon tetrachloride by distillation.

2. A method of claim 1 wherein the light contains at least a large proportion of ultraviolet light.

3. A method of claim 1 or claim 2 wherein the light exposure continues for a time until substantially all the methyl groups are chlorinated.

4. A method of claim 3 wherein the time is at least 45 minutes.

5. A method of any one of the preceding claims wherein chlorine is present in at least an equimolar amount relative to moles of methylchlorosilane.

## Patentansprüche

1. Verfahren zum Reinigen von Siliziumtetrachlorid, das eine geringe Menge zumindest eines Methylchlorsilans enthält, folgende Schritte umfassend:
Belichten des Siliziumtetrachlorids in Gegenwart von Chlor, um dadurch Methylgruppen des Methylchlorsilans zu chlorieren, und
Trennen des chlorierten Methylchlorsilans und des Siliziumtetrachlorids durch Destillation.

2. Verfahren nach Anspruch 1, worin das Licht zumindest einen großen Anteil an UV-Licht enthält.

3. Verfahren nach Anspruch 1 oder 2, worin die Belichtung für einen Zeitraum fortgesetzt wird, bis im wesentlichen alle Methylgruppen chloriert sind.

4. Verfahren nach Anspruch 3, worin der Zeitraum zumindest 45 Minuten beträgt.

5. Verfahren nach einem der vorhergehenden Ansprüche, worin Chlor zumindest in einer äquimolaren Menge bezüglich der Mole an Methylchlorsilan vorhanden ist.

## Revendications

1. Procédé de purification de tétrachlorure de silicium contenant une quantité mineure d'au moins un méthylchlorosilane, comprenant les étapes de :
exposition du tétrachlorure de silicium à la lumière en présence de chlore, chlorurant par là les groupes méthyle des méthylchlorosilanes, et
séparation du méthylchlorosilane chloré et du tétrachlorure de silicium par distillation.

2. Procédé selon la revendication 1, dans lequel la lumière contient au moins une large proportion de lumière ultraviolette.

3. Procédé selon la revendication 1 ou 2, dans lequel l'exposition à la lumière continue pendant une durée jusqu'à ce que substantiellement tous les groupes méthyle soient chlorés.

4. Procédé selon la revendication 3, dans lequel le temps est d'au moins de 45 minutes.

5. Procédé selon l'une quelconque des revendications précédentes, dans lequel le chlore est présent en au moins une quantité équimolaire par rapport aux moles de méthylchlorosilane.